## Europäisches Patentamt
## European Patent Office
## Office européen des brevets

(19)

(11) Veröffentlichungsnummer: **0 008 710**
**B1**

(12) **EUROPÄISCHE PATENTSCHRIFT**

(45) Veröffentlichungstag der Patentschrift: **08.02.84**

(21) Anmeldenummer: **79102947.3**

(22) Anmeldetag: **13.08.79**

(51) Int. Cl.³: **G 01 N 27/90,
G 21 C 17/00**

(54) Sonde zur Wirbelstromprüfung von Rohren.

(30) Priorität: **28.08.78 DE 2837486**

(43) Veröffentlichungstag der Anmeldung:
**19.03.80 Patentblatt 80/6**

(45) Bekanntmachung des Hinweises auf die Patenterteilung:
**08.02.84 Patentblatt 84/6**

(84) Benannte Vertragsstaaten:
**CH FR GB NL SE**

(56) Entgegenhaltungen:
**FR - A - 2 320 542
FR - A - 2 406 198
US - A - 3 363 170
US - A - 3 952 315**

(73) Patentinhaber: **KRAFTWERK UNION
AKTIENGESELLSCHAFT
c/o SIEMENS AG Postfach 261
D-8000 München 22 (DE)**

(72) Erfinder: **Schnabl, Karl
Heinrich-Heine-Strasse 6
D-8523 Baiersdorf (DE)**
Erfinder: **Kastl, Hans
Tulpenstrasse 11
D-8482 Neustadt/Waldnaab (DE)**
Erfinder: **Höppner, Eberhard
Michael-Vogel-Strasse 20
D-8520 Erlangen (DE)**

(74) Vertreter: **Mehl, Ernst, Dipl.-Ing. et al,
Postfach 22 01 76
D-8000 München 22 (DE)**

Courier Press, Leamington Spa, England.

## Sonde zur Wirbelstromprüfung von Rohren

Die Erfindung betrifft eine Sonde zur Wirbelstromprüfung von bei Dampferzeugern in Kernkraftwerken verwendeten Rohren mit einem zylindrischen Spulenkörper, der mit einem Schubschlauch zum Bewegen der Sonde durch die Rohre mechanisch und elektrisch gekoppelt ist, mit einem dem Spulenkörper zugeordneten elastischen Mantel mit Führungsteilen, die einen größeren Durchmesser als der Spulenkörper aufweisen und auf beiden Seiten des Spulenkörpers angeordnet sind.

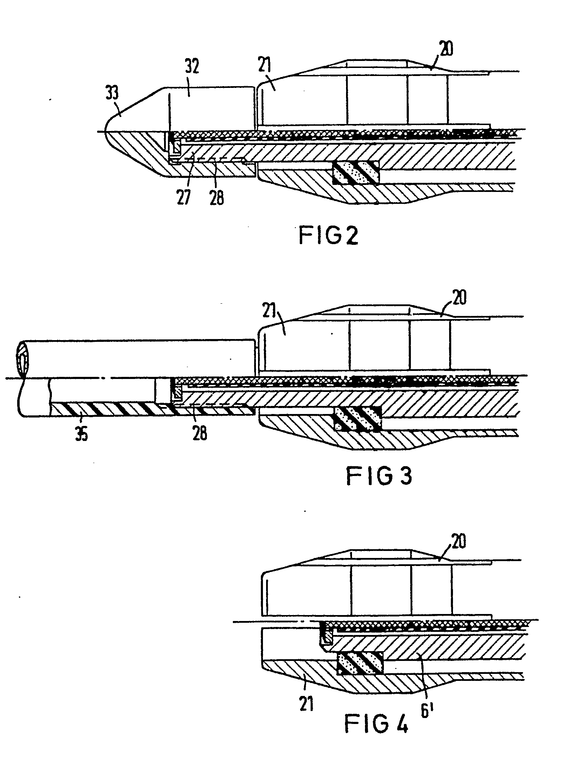

Bei der aus der DE—A—26 35 537 bekannten Sonde der oben genannten Art ist nach der Fig. 3 der Mantel eine Kunststoffmasse, die über die gesamte Länge der Sonde reicht und den Spulenkörper sowie das zur Sonde führende Elektrokabel an seinem der Sonde zugekehrten Ende vollständig einschließt. Auf der Außenseite der Kunststoffmasse sitzen Metallringe. Dies ist wahrscheinlich damit zu erklären, daß die Kunststoffmasse in der Regel schlechte Gleiteigenschaften hat. Deshalb kann es besonders dann, wenn der Kunststoff im Hinblick auf eine erwünschte Krümmung der Sonde recht weich ist, zu einem Stauchen mit einer ·Durchmesseraufweitung kommen, die das weitere Bewegen im Rohr unmöglich macht.

Andere Ausführungsformen der bekannten Sonde haben auf Federn sitzende einzelne Führungsteile. Hier ist jedoch die Flexibilität möglicherweise so groß, daß die Sonde instabil wird und die Meßgenauigkeit leidet. Außerdem besteht die Gefahr, daß die Sonde durch eindringenden Schmutz oder durch Einwirkung einer Vorschubeinrichtung beschädigt wird, mit der die Sonde in die Rohre eingefahren werden muß. Dies ist besonders nachteilig, weil ein Auswechseln der Sonde offenbar nicht vorgesehen ist.

Aufgabe der Erfindung ist es demnach, die Beweglichkeit der Sonde im Rohr zu vergrößern, dabei aber auch eine hohe Meßgenauigkeit zu gewährleisten und zugleich den Personalaufwand für die Bedienung und Auswechselung so klein wie möglich zu halten. Hierbei ist zu bedenken, daß die Dampferzeuger in Kernkraftwerken im allgemeinen radioaktiv kontaminiert sind, so daß in ihrer Nähe arbeitendes Personal nur kurzzeitig bis zum Erreichen der zulässigen Dosisleistungen verbleiben kann.

Erfindunggemäß ist eine Sonde der oben genannten Art so ausgebildet, daß die Führungsteile in an sich bekannter Weise aus als Blattfedern wirkenden Lamellen gebildet sind und daß auf der dem Schubschlauch zugekehrten Seite des Mantels ein Stecker als Teil einer Schnellkupplung mit Bajonettverschluß vorgesehen ist, die die Verbindung der Sonde mit dem Schubschlauch bildet. Dies ergibt folgende Wirkung:

Die Lamellenausbildung zu beiden Seiten des Spulenkörpers ergibt trotz des praktisch geschlossenen Mantels, der das Eindringen von Schmutz oder das Verklemmen an Verkrustungen verhindert, eine Flexibilität, die eine Anpassung an Ungleichförmigkeiten der zu prüfenden Rohre und Biegungen ermöglicht. Dabei wird der Spulenkörper in der für die Messung günstigen zentralen Lage gehalten, in der er mit geringem Abstand auf die zu untersuchende Rohrwandung ausgerichtet ist, weil er im Gegensatz zu der eingangs behandelten Sonde nicht in Kunststoff eingeschlossen ist. Die mit der Flexibilität möglicherweise verbundene mechanische Empfindlichkeit spielt bei der erfindungsgemäßen Sonde deswegen keine Rolle, weil dank der Schnellkupplung mit Bajonettverschluß eine leichte und schnelle Auswechselung möglich ist. Die Sonde nach der Erfindung braucht deswegen auch nicht mehr die Vorschubeinrichtungen zu durchlaufen, die zweckmäßig dicht am Dampferzeuger sitzen. Sie kann vielmehr vor jedem vollstandigen Abziehen des Schubschlauches abgenommen werden. Dies unterscheidet sie auch von Sonden, die aus der DE—C—22 63 143 bekannt geworden sind und die zum Auswechseln zusammen mit dem Schubschlauch aufgetrommelt werden und deshalb die Vorschubeinrichtung durchlaufen.

Besonders günstig ist wine Ausführungsform der Erfindung, bei der Spulenkörper und Mantel an einem rohrförmigen Tragkörper befestigt sind, der mit dem Stecker der Schnellkupplung über einen Kunststoffschlauch verbunden ist. Der Tragkörper kann für den mechanischen Halt der Sonde sorgen und die Vorschubkräfte des Spulenkörpers unmittelbar auf den Stecker übertragen, der vorteilhaft mit einem aufgeschrumpften Verbindungsstück befestigt sein kann, so daß eine auf der Außenseite glatte und elastische aber dennoch zuverlässige Verbindung entsteht.

Wenn die Lamellen im Interesse der Abriebfestigkeit aus einem relativ harten Werkstoff bestehen und deswegen die Federeigenschaften zu wünschen übrig lassen, können die Lamellen auf der dem Stecker zugekehrten Seite, aber auch auf der abgekehrten Seite mit dem Tragkörper einen Gummikörper einschließen, der für die zum Spreizen der Lamellen gewünschte Elastizität sorgt.

Durch die US—A—3 363 170 ist es zwar bekannt, einer Sonde zur Wirbelstromprüfung, die über ein Zugseil in eine Rohrleitung eines Brunnens oder dergleichen hinabgelassen wird, beidseits ihres Gehäuses Zentrierende Führungskörper zuzuordnen, welche faßdaubenartig nach außen sich wölbende und an die Rohrinnenwand sich anlegende Blattfedern aufweisen, die in den Kraftfluß Zugseil-Sonde einbezogen sind. Für die Sonde nach der Erfindung, die mit einem Schubschlauch, der sowohl auf Schub als auch auf Zug belastbar sein muß, zusammenarbeitet, wären solche in den Vorschub- und Rückzug-Kraftfluß eingeschaltete Führungskörper nicht geeignet, da es beim Schub zu Verklemmungen an der Rohrwand kommen kann.

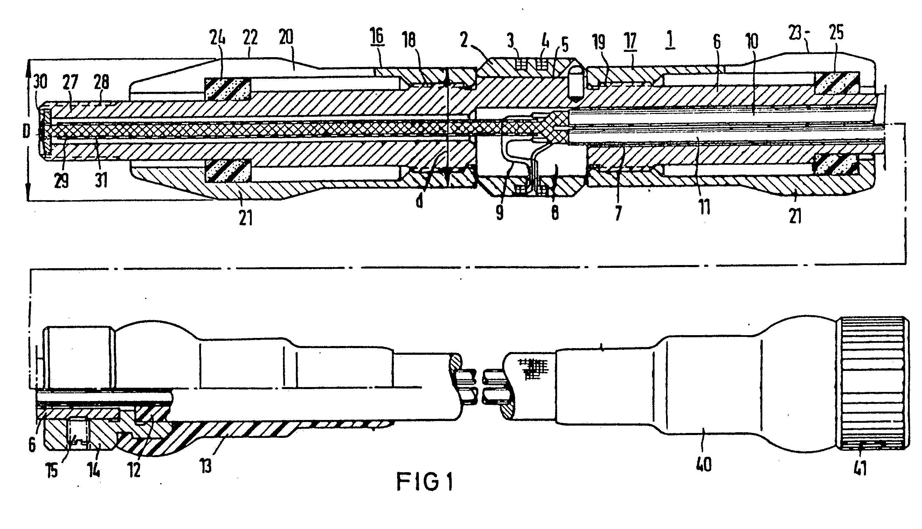

Zur näheren Erläuterung der Erfindung wird anhand der beiliegenden Zeichnung ein Aufführungsbeispiel beschrieben. Die in Fig. 1, in einem Längsschnitt dargestellte Wirbelstromsonde, die in vergrößertem Maßstabe gezeichnet ist, dient zur Prüfung von Rohren and Dampferzeugern eines Druckwasserreaktors. Dabei können zur Anpassung der Sonde an besonders räumliche Verhältnisse die in den Fig. 2, 3 und 4 dargestellten Abwandlungen der Sondenspitze vorteilhaft sein.

Die Sonde ist fast vollständig rotationssymmetrisch aufgebaut. Sie besitzt als wichtigstes Teil einen zylindrischen Spulenkörper 2 aus Polyoxymethylen, in dem zwei Spulen 3 und 4 zur Wirbelstromprüfung in zwei zur Längsachse senkrechten parallelen Ebenen untergebracht sind.

Der Spulenkörper 2 sitzt auf der Ringfläche 5 eines Tragkörpers 6, der ebenfalls aus Polyoxymethylen besteht und einen zentralen Hohlraum 7 aufweist. Im Bereich des Spulenkörpers 2 ist der Tragkörper 6 an einer Stelle bis zur Ringfläche 5 seitlich ausgenommen. Durch die Ausnehmung 8 führen Anschlußdrähte 9 zu den Spulen 3 und 4.

Die Anschlußdrähte 9 gehören zu zwei Koaxialkabeln 10, 11, die außerhalb der Sonde 1 in einem Polyäthylen-Schlauch 12 gefaßt sind. Dieser ist mit einem Formstück 13 aus thermoplastischem Material gehalten, der auf ein Verbindungsstück 14 aus Polyoxymethylen aufgeschrumpft ist. Das Verbindungsstück 14 ist mit einem Gewindestift 15 am Tragkörper 6 befestigt. An dem der Sonde 1 abgekehrten Ende des Schlauches 12 ist mit einem gleichen Verbindungsstück 40 ein Stecker 41 befestigt, der als Teil einer Schnellkupplung eine leicht montierbare mechanische und elektrische Verbindung mit einem nicht dargestellten Schubschlauch ermöglicht.

Der rohrförmige Tragkörper 6 hat einen wesentlich kleineren Durchmesser als der Spulenkörper 2. Er trägt zu beiden Seiten des Spulenkörpers 2 zwei Rohrstücke 16 und 17 aus Polyoxymethylen, die auf Gewinde 18 und 19 des Tragkörpers 6 in der Nachbarschaft des Spulenkörpers 2 aufgeschraubt sind. Die Rohrstücke 16, 17 sind in dem vom Gewinde 18, 19 abgekehrten Bereich über etwa der Hälfte ihrer Länge mit Schlitzen 20 versehen und bilden so einen elastischen Mantel mit Lamellen 21. Beim Ausführungsbeispiel sind jeweils acht Lamellen 21 um den Umfang der Sonde 1 verteilt.

Die Rohrstücke 16 und 17 sind im geschlitzten Bereich verdickt (Führungsteile 22, 23). Der Durchmesserunterschied zwischen dem größten Durchmesser D, der größer ist als der Durchmesser des Spulenkörpers 2, und dem kleineren Durchmesser d im Bereich der Gewinde 18 und 19 beträgt mit 2 mm etwa 10% des größten Durchmessers D. In dem verdickten Bereich (Führungsteile 22, 23) ist zwischen dem Tragkörper 6 und den Rohrstücken 16 und 17 je ein Ring 24 und 25 aus gummielastischem Material, vorzugsweise aus sogenannten Moos-Gummi angeordnet. Damit wird eine gleichmäßig nach außen wirkende Vorspannung der Lamellen 21 aufgebracht, die ein gleichmäßiges Anliegen an der Innenseite des zu prüfenden Rohres ergibt. Auf diese Weise wird der Spulenkörper 2 mit den darauf befindlichen Spulen 3 und 4 in gleichmäßigem Abstand von der Rohrwand gehalten.

Bei dem Ausführungsbeispiel nach Fig. 1 ragt der Haltekörper 6 mit seiner Spitze 27, die mit einem Außengewinde 28 versehen ist, aus dem Bereich der Lamellen 21 heraus. Dort sind die als Drahtnetz ausgebildeten Abschirmungen 29 der Kabel 10, 11 mit einer Scheibe 30 befestigt, auf die die Abschirmungen aufgelötet sind. Über die Abschirmungen 29 ist als mechanischer Schutz ein Isolierschlauch 31 geschoben.

Beim Ausführungsbeispiel nach Fig. 2 ist auf das Gewinde 28 der Spitze 27 eine Kappe 32 aus Polyoxymethylen aufgeschraubt, die einen kleineren Durchmesser als die Rohrstücke 16 und 17 aufweist und in eine Spitze 33 ausläuft. Damit ist zusätzlich zu der äußeren Abschrägung 34 des Mantels 16, die als Führungskopf wirkt, eine weitere Zentriermöglichkeit für das Einführen der Sonde in ein Rohr gegeben.

Beim Ausführungsbeispiel nach Fig. 3 ist auf das Gewinde 28 ein aus Polyäthylen bestehender Zugschlauch 35 aufgeschraubt. Der Zugschlauch kann bei der Prüfung von Rohren von der der Einführung der Sonde 1 gegenüberliegenden Seite in das zu prüfende Rohr geschoben werden, damit für das Einführen der Sonde 1 eine größere Kraft aufgebracht werden kann, als wenn die Sonde nur von einer Seite mit dem Schubschlauch durch das Rohr transportiert werdenmüßte.

Bei der Ausführungsform nach Fig. 4 ist der Tragkörper 6' verkürzt. Er endet innerhalb der Lamellen 21.

**Patentansprüche**

1. Sonde zur Wirbelstromprüfung von bei Dampferzeugern in Kernkraftwerken verwendeten Rohren mit einem zylindrischen Spulenkörper, der mit einem Schubschlauch zum Bewegen der Sonde durch die Rohre mechanische und elektrisch gekoppelt ist, mit einem dem Spulenkörper zugeordneten elastischen Mantel mit Führungsteilen, die einen größeren Durchmesser als der Spulenkörper aufweisen und auf beiden Seiten des Spulenkörpers angeordnet sind, dadurch gekennzeichnet, daß die Führungsteile (22, 23) in an sich bekannter Weise aus als Blattfedern wirkenden Lamellen (21) gebildet sind und daß auf der dem Schubschlauch zugekehrten Seite des elastischen Mantels (16, 17) ein Stecker (41) als Teil einer Schnellkupplung mit Bajonettverschluß vorgesehen ist, die die Verbindung der Sonde (1) mit dem Schubschlauch bildet.

2. Sonde nach Anspruch 1, dadurch gekennzeichnet, daß Spulenkörper (2) und elastischer Mantel (16, 17) an einem rohrförmigen Tragkörper (6) befestigt sind, der mit dem Stecker (41) der Schnellkupplung über einen Kunststoffschlauch (12) verbunden ist.

3. Sonde nach Anspruch 2, dadurch gekennzeichnet, daß der Stecker (41) mit einem aufgeschrumpften Verbindungsstück (40) befestigt ist.

4. Sonde nach Anspruch 2 oder 3, dadurch gekennzeichnet, daß die Lamellen (21) mit dem Tragkörper (6) einen Gummikörper (25) einschließen.

## Revendications

1. Sonde pour le contrôle, par courants de Foucault, de tubes utilisés dans des générateurs de vapeur de centrales nucléaires, avec un corps de bobine cylindrique qui est accouplé mécaniquement et électriquement à un tuyau de poussée pour déplacer la sonde dans les tuyaux, avec une enveloppe élastique associée au corps de bobine et comportant des éléments de guidage ayant un diamètre supérieur à celui du corps de bobine et disposés des deux côtés du corps de bobine, caractérisée par le fait que les éléments de guidage (22, 23) sont constitués, de façon connue en soi, par des lamelles (21) agissant comme des ressorts à lames et que sur le côté de l'enveloppe élastique (16, 17) tourné vers le tuyau de poussée, il est prévu un connecteur mâle (41) constituant un élément d'un raccordement rapide à accouplement à baïonnette qui constitue la liaison de la sonde (1) avec le tuyau de poussée.

2. Sonde selon la revendication 1, caractérisée par le fait que le corps de bobine (2) et l'enveloppe élastique (16, 17) sont fixés à un corps de support tubulaire (6) qui est relié au connecteur mâle (41) du raccordement rapide par l'intermédiaire d'un tuyau en matière plastique (12).

3. Sonde selon la revendication 2, caractérisée par le fait que le connecteur mâle (41) est fixé à une pièce de liaison (40) emmanchée par frêtage.

4. Sonde selon la revendication 2 ou 3, caractérisée par le fait que les lamelles (21) emprisonnent, avec le corps de support (6), un corps en caoutchouc (25).

## Claims

1. A probe for testing eddy currents in pipes which are used in steam generators in nuclear power stations, having a cylindrical coil body which is mechanically and electrically coupled to a thrust tube for moving the probe through the pipes, and an elastic casing which is allotted to the coil body and has guide components which have a larger diameter than the coil body and are arranged on both sides of the coil body, characterised in that the guide components (22, 23) are formed in a manner which is known per se, from lamellae (21) acting as leaf springs; and that, on the side of the elastic casing (16, 17) which faces the thrust tube, there is arranged a plug (41) forming a part of a quick coupling with a bayonet catch, which forms the connection of the probe (1) with the thrust tube.

2. A probe according to Claim 1, characterised in that the coil body (2) and the elastic casing (16, 17) are secured to a tubular support body (6) which is connected to the plug (41) of the quick coupling by means of a plastics tube (12).

3. A probe according to Claim 2, characterised in that the plug (41) is fastened by means of a connecting piece (40) which is shrunk on.

4. A probe according to Claim 2 or Claim 3, characterised in that the lamellae (21), together with the support body (6), enclose a rubber body (25).

FIG 1

0 008 710

FIG 2

FIG 3

FIG 4